# FASCICULE DE BREVET EUROPEEN

(11) **EP 1 348 611 B1**
(45) Date de publication et mention de la délivrance du brevet: **13.10.2004**
(21) Numéro de dépôt: 03290686.9
(22) Date de dépôt: 18.03.2003
(51) Int. Cl.: B62D 7/18

(54) **Dispositif de fixation de pivot de roue de véhicule automobile**
Halterung für schwenkbare Kraftfahrzeug-Radaufhängung
Fixation for a pivotable vehicle wheel

(30) Priorité: 26.03.2002 FR 0203764
(43) Date de publication de la demande: 01.10.2003
(73) Titulaire: Aktiebolaget SKF, S-415 50 Göteborg (SE)
(72) Inventeur: Marteau, Cécile, 41400 Montrichard (FR); Houdayer, Christophe, 37360 Semblancay (FR)
(74) Mandataire: Casalonga, Axel

(56) Documents cités:
- DE-A- 19 949 452
- HAYWOOD CH: "NEW BEARING BEATS ALL MISALIGNMENT" EUREKA (INC. ENGINEERING MATERIALS AND DESIGN), FINDLAY PUBLICATIONS, HORTON KIRBY, KENT, GB, vol. 15, no. 5, 1 mai 1995 (1995-05-01), pages 20-21,23, XP000514911 ISSN: 0261-2097

## Description

La présente invention concerne un dispositif de fixation de pivot de roue de véhicule automobile, et notamment un dispositif de fixation de pivot de roue directrice de véhicule automobile du type défini dans la revendication 1 et connu par exemple de DE 19549452 A.

Une roue d'un véhicule automobile est généralement liée au châssis du véhicule par un ensemble de liaison au sol permettant un mouvement sensiblement vertical de la roue, ou débattement de roue, avec amortissement pour assurer le confort et la tenue de route du véhicule. Une roue directrice doit être montée avec possibilité de rotation selon un axe sensiblement vertical pour permettre une orientation de la roue pour commander un changement de direction du véhicule automobile.

Un ensemble de suspension comprend généralement un moyeu sur lequel la roue est fixée. Le moyeu est monté à rotation selon un axe sensiblement horizontal sur un pivot, lui-même monté à rotation selon un axe principal sensiblement vertical sur un support de pivot, qui est relié par un système de suspension et d'amortissement au châssis du véhicule. Le système de suspension et d'amortissement autorise un mouvement de débattement sensiblement vertical du support de pivot. La roue et le pivot se déplacent verticalement avec le support de pivot. Le pivot comprend généralement un bras de direction dont une extrémité décalée par rapport à l'axe principal de pivot est reliée à une biellette de direction. Un déplacement de la biellette commande une orientation angulaire du pivot et de la roue directrice. Si la roue directrice est une roue motrice, la roue est reliée à un arbre d'entraînement, par exemple par une liaison à cardan.

L'ensemble de liaison au sol transmet les efforts d'accélération longitudinale, d'accélération transversale et de freinage entre la roue et le châssis. Les éléments de l'ensemble de liaison au sol, et notamment le support de pivot, sont soumis à des contraintes élevées.

Le pivot est généralement relié au support de pivot par l'intermédiaire d'une articulation supérieure et d'une articulation inférieure définissant l'axe principal de rotation du pivot. On connaît par le document FR 2 781 185 un dispositif de suspension du type décrit ci-dessus et dans lequel un pivot est relié à une jambe support par l'intermédiaire de deux articulations sous la forme de rotules.

Des déformations importantes du support de pivot entraîneraient des défauts de positionnement et d'alignement entre les articulations supérieure et inférieure définissant l'axe de pivotement du pivot. De tels défauts provoquent l'apparition d'efforts de friction et de contraintes importantes dans les articulations et le pivot. Le support de pivot est généralement en matériau composite ou métallique possédant une rigidité importante, évitant des déformations gênantes du support de pivot lorsque ce dernier est soumis à des contraintes importantes.

Des efforts sont entrepris dans la conception des véhicules automobiles pour diminuer la consommation d'énergie et augmenter les performances des véhicules automobiles. Une réduction de la masse du véhicule permet d'atteindre ces objectifs. Dans le cas des ensembles de liaison au sol, l'allégement des pièces permet en outre de diminuer la masse de pièces mobiles par rapport au châssis. Cet allègement permet l'amélioration des performances du système de suspension et d'amortissement disposé entre le pivot et le châssis du véhicule, et en facilite la conception.

Cependant, l'utilisation d'éléments d'ensemble de suspension allégés entraîne le plus souvent une diminution de la rigidité de ces éléments. Un support de pivot moins rigide entraîne des risques de variations de positionnement et défaut d'alignement entre les articulations supérieure et inférieure du support de pivot.

La présente invention a pour objet un dispositif de fixation de pivot de roue de véhicule automobile permettant un allègement de pièces d'un ensemble de liaison au sol tout en assurant une transmission convenable des efforts entre les pièces, malgré des déformations de certaines pièces.

L'invention a également pour objet un dispositif de fixation de pivot de roue de véhicule automobile simple, de coût de fabrication faible, et permettant une simplification du montage d'un ensemble de liaison au sol.

L'invention a encore pour objet un dispositif de fixation de pivot de roue de véhicule automobile permettant une adaptation d'articulation du pivot et limitant l'apparition d'efforts de friction lors de mouvements relatifs entre les pièces.

A cet effet, le dispositif de fixation de pivot de roue selon l'invention comporte les caractéristiques définies dans la revendication 1.

Un tel dispositif de fixation de pivot de roue de véhicule automobile comprend un support de pivot prévu pour être relié à un ensemble de liaison au sol, le support étant apte à recevoir un pivot avec possibilité de rotation selon un axe principal de pivotement par l'intermédiaire de première et seconde articulations, la première articulation possédant au moins un degré de liberté de rotation selon l'axe principal, la seconde articulation comprenant un palier à roulement offrant principalement un degré de liberté de rotation selon l'axe principal, avec possibilité de rotation selon des axes secondaires perpendiculaires à l'axe principal et de déplacement axial sensiblement selon l'axe principal.

De façon générale, la première articulation est une articulation du type rotule à trois degrés de liberté de rotation ou palier à roulement à axe orienté selon l'axe principal. Si la seconde articulation est également du type rotule à trois degrés de liberté de rotation, ou du type palier à roulement à axe orienté selon l'axe principal, des variations dimensionnelles du support de pivot entraîneront la formation de contraintes dans le pivot. La seconde articulation comprenant un palier à roulement avec possibilité de rotation selon des axes secondaires permet une adaptation de la seconde articulation en cas de défauts de coaxialité entre les articulations suite à une déformation du support de pivot. La seconde articulation comprenant un palier à roulement permettant un déplacement axial sensiblement selon l'axe principal permet une adaptation de la seconde articulation lorsque la distance entre les articulations varie suite à une déformation du support de pivot. L'adaptation de la seconde articulation évite l'apparition d'efforts de friction dans les articulations ou de contraintes dans les articulations ou le pivot en cas de défauts de positionnement ou d'alignement relatif des articulations du pivot.

Dans un mode de réalisation, le support comprend un corps et des premier et second bras s'étendant sensiblement perpendiculairement au corps à partir d'extrémités opposées du corps, les première et seconde articulations étant portées par des extrémités libres des premier et second bras. Les articulations situées aux extrémités des bras permettent la rotation du pivot dans un secteur angulaire déterminé, sans que le pivot, la roue ou une pièce de freinage ou d'entraînement ne heurte le support de pivot. Un support de pivot possédant une telle structure permet d'obtenir une rigidité suffisante compte tenu des possibilités de rotation et de déplacement axial de la seconde articulation, tout en autorisant un allégement du support de pivot, par l'emploi d'alliage légers moins rigides que l'acier, ou par enlèvements de matière ou réduction d'épaisseurs.

Dans un mode de réalisation préféré, la seconde articulation est munie d'un palier à roulement comprenant une première bague, une seconde bague, une rangée de rouleaux disposés entre des chemins de roulement des première et seconde bagues, les axes des rouleaux étant sensiblement parallèles entre eux, les rouleaux et les chemins de roulement présentant en section longitudinale des profils incurvés de façon correspondante dont le rayon de courbure est notablement plus grand que la plus grande distance entre l'axe central du palier à roulement et les surfaces des chemins de roulement, le rayon de courbure des chemins de roulement pouvant être supérieur au rayon de courbure des rouleaux. Ce type de palier à roulement est particulièrement adapté pour permettre un certain déplacement axial relatif des bagues intérieures et extérieures, une légère rotation selon des axes perpendiculaires à l'axe principal de rotation, tout en assurant la transmission des efforts radiaux avec des frottements faibles, malgré les mouvements relatifs des bagues intérieure et extérieure.

Dans un mode de réalisation, la seconde articulation comprend une bride pourvue d'une partie de fixation sur le support de pivot et d'une partie de logement d'un palier à roulement, la partie de logement présentant une portée intérieure cylindrique destinée à recevoir une bague extérieure du palier à roulement. Le pivot doit être relié au support de pivot par deux articulations simultanément, ce qui rend le montage plus compliqué. Le pivot et le support de pivot doivent êtres maintenus en position pour permettre le montage simultané des deux articulations. Au contraire, la bride peut être pré-assemblée avec le palier à roulement et se présente sous la forme d'une ensemble indépendant du support de pivot, et pourvu de moyens de fixation sur le support de pivot. On commence par relier le pivot et le support de pivot par la première articulation, puis on dispose la seconde articulation, et ensuite seulement on fixe la seconde articulation sur le support de pivot. Le montage du pivot sur le support de pivot s'en trouve simplifié.

Dans un mode de réalisation avantageux, la seconde articulation comprend des moyens d'étanchéité et de protection d'un palier à roulement adaptés pour des déplacements relatifs d'une bague par rapport à l'autre.

Dans un mode de réalisation, la partie de logement est fermée axialement d'un côté par un flasque radial présentant un renfoncement intérieur central. Le flasque permet le positionnement d'une bague extérieure du palier à roulement venant en appui par une surface frontale sur le flasque. Le renfoncement central autorise le déplacement d'une bague intérieure par rapport à la bague extérieure, de façon qu'une surface frontale de la bague intérieure vienne en saillie au-delà de la surface frontale de la bague extérieure, sans que son déplacement ne soit entravé par le flasque.

Dans un mode de réalisation avantageux, le dispositif comprend un organe d'étanchéité comprenant une partie externe coopérant avec une surface frontale d'une bague extérieure d'un palier à roulement, une partie interne coopérant avec une surface frontale d'une bague intérieure dudit palier à roulement, et une membrane déformable intermédiaire reliant les parties interne et externe. L'organe d'étanchéité comprenant une membrane intermédiaire déformable disposée entre une partie interne et une partie externe autorise un mouvement axial d'une partie par rapport à l'autre dû à un mouvement axial d'une bague du palier à roulement par rapport à l'autre sans perdre l'étanchéité entre les bagues du palier à roulement. La membrane déformable autorise également une rotation d'une bague par rapport à l'autre selon des axes perpendiculaires à l'axe principal du roulement, ou encore un déplacement radial entre les bagues, sans perdre l'étanchéité entre les bagues.

Dans un mode de réalisation, l'organe d'étanchéité comprend une lèvre s'étendant à partir de la partie interne de l'organe d'étanchéité pour un contact étanche avec le pivot. La lèvre d'étanchéité empêche l'intrusion corps polluants extérieurs entre le pivot et la bague intérieure du palier à roulement.

Dans un mode de réalisation, la partie externe comprend un manchon ajusté sur une surface extérieure d'une portion d'extrémité de la bague extérieure. Le manchon permet la fixation de l'organe d'étanchéité sur la bague extérieure, et coiffe le palier à roulement pour une meilleure étanchéité.

Dans un mode de réalisation, la bride comprend au moins deux bras s'étendant à partir d'une partie de logement de la bride et possédant des extrémités distantes percées pour une fixation avec le support. La fixation de la bride par des extrémités distantes permet une fixation rigide de la bride sur le support de pivot.

L'invention concerne également une bride de fixation d'un pivot sur un support de pivot, comprenant une partie de logement d'un palier à roulement et une partie de fixation sur le support de pivot, la partie de logement étant apte à recevoir un palier à roulement offrant principalement un degré de liberté de rotation selon l'axe principal, avec possibilité de rotation selon des axes secondaires perpendiculaires à l'axe principal et de déplacement axial sensiblement selon l'axe principal, et des moyens d'étanchéité adaptés pour un tel palier à roulement.

L'invention concerne encore un organe d'étanchéité comprenant une partie externe coopérant avec une surface frontale d'une bague extérieure d'un palier à roulement, une partie interne coopérant avec une surface frontale d'une bague intérieure dudit palier à roulement, et une membrane déformable intermédiaire reliant les parties interne et externe. L'organe d'étanchéité assure l'étanchéité entre les bagues intérieure et extérieure malgré des mouvements de rotation et de déplacement axial ou radial d'une bague par rapport à l'autre. avantageusement, la partie interne et/ou la partie externe peuvent comprendre une armature rigide.

La présente invention et ses avantages seront mieux compris à l'étude de la description détaillée d'un mode de réalisation pris à titre d'exemple nullement limitatif et illustrée par les dessins annexés, sur lesquels :
- la figure 1 est une vue schématique d'un ensemble de liaison au sol d'un véhicule automobile.
- la figure 2 est une vue en coupe d'un dispositif de fixation d'un pivot sur un support de pivot selon un aspect de l'invention ;
- la figure 3 est une vue en coupe d'une bride de fixation d'un pivot selon un aspect de l'invention ;
- la figure 4 est une vue en perspective d'une bride selon la figure 3 ;
- la figure 5 est une demi-vue en coupe axiale d'un organe d'étanchéité destiné à une bride de fixation de pivot, selon un aspect de l'invention ;
- la figure 6 est une vue en perspective d'un organe d'étanchéité selon la figure 5 ;
- la figure 7 est une vue en coupe partielle d'un dispositif de fixation d'un pivot dans une première position ; et
- la figure 8 est une vue en coupe partielle d'un dispositif de fixation d'un pivot dans une seconde position.

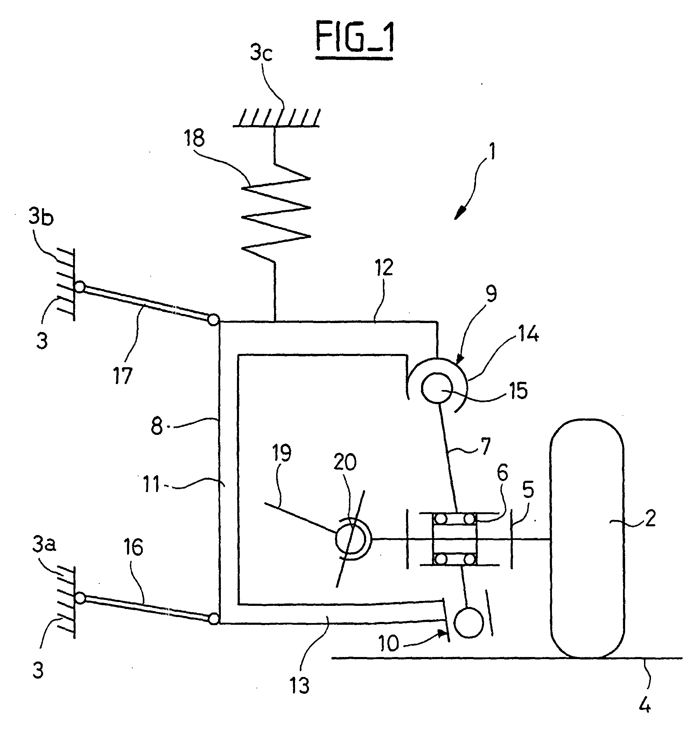

Sur la figure 1, un ensemble de liaison au sol, référencé 1 dans son ensemble, relie une roue motrice et directrice 2 au châssis 3 d'un véhicule représenté par des points fixes avec possibilité de débattement accompagné de suspension et d'amortissement. La roue 2 est en appui sur un revêtement de sol 4 que l'on prend comme référence pour définir une direction verticale, perpendiculaire au sol 4, et une direction horizontale, parallèle au sol 4.

L'ensemble de liaison au sol 1 comprend un moyeu 5, monté à rotation selon un axe sensiblement horizontal sur un pivot 7, par l'intermédiaire d'un palier à roulement 6. Le pivot 7 est monté à rotation selon un axe sensiblement vertical sur un support de pivot 8 par des première et seconde articulations 9, 10, en vue d'un pivotement dans un certain secteur angulaire. Le support de pivot 8 est en forme générale de C. Le support de pivot 8 comprend un corps 11, un bras supérieur 12 s'étendant à partir d'une extrémité supérieure du corps 11, et un bras inférieur 13 s'étendant à partir d'une extrémité inférieure du corps 11. La première articulation 9 est située à l'extrémité libre du bras supérieur 12 du support de pivot 8. La seconde articulation 10 est située à l'extrémité libre du bras inférieur 13 du support de pivot 8.

La première articulation 9 est du type rotule et comprend un logement sphérique 14 formé à l'extrémité libre du bras supérieur 12, et une rotule sphérique 15 solidaire du pivot 7. La seconde articulation 10 est possède un degré de liberté principal, selon un axe principal sensiblement vertical passant par le centre de la première articulation 9, avec possibilité de rotation selon des axes secondaires perpendiculaires à l'axe principal, et possibilité de déplacement axial sensiblement selon l'axe principal.

Un premier bras 16 est disposé entre le support de pivot 8 et une partie de fixation 3a du véhicule en étant articulé à ses deux extrémités. Un second bras 17 est disposé entre le support 8 et un autre partie de fixation 3b du châssis 3, en étant articulé à ses deux extrémités. Le second bras 17 est parallèle au premier bras 16. Les premier et second bras 16, 17 sont disposés de façon que le support de pivot 8 peut se déplacer sensiblement verticalement pour accompagner un mouvement de la roue 2.

Un dispositif de suspension 18 est disposé entre le support de pivot 8 et une partie de fixation 3c du châssis 3. Le dispositif de suspension 18 est symbolisé par une ligne brisée et permet de façon connue un amortissement des mouvements de débattement du support de pivot. Le dispositif de suspension peut être à titre d'exemple nullement limitatif un combiné ressort-amortisseur ou un amortisseur hydropneumatique.

Le moyeu 5 est relié, du côté du pivot 7 opposé à la roue 2, à un arbre d'entraînement 19, relié de façon non représentée à un arbre de sortie d'une boîte de vitesses d'un moteur d'entraînement du véhicule automobile. Une liaison du type cardan 20 est disposée entre l'arbre d'entraînement 19 et le moyeu 5 pour permettre la transmission de puissance de l'arbre d'entraînement 19 vers la roue 2, malgré des mouvements de débattement et de direction de la roue 2.

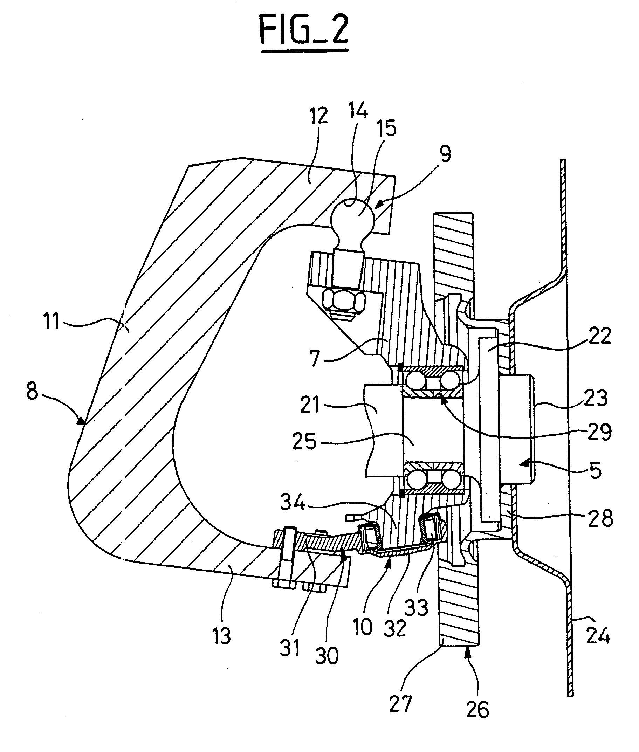

Sur la figure 2, les références des éléments semblables ont été reprises. Le moyeu 5 est entraîné en rotation par un arbre 21. Le moyeu 5 est muni d'une collerette radiale 22 et d'une extrémité 23 de centrage d'une jante 24 de roue. Le moyeu 5 comprend une extension axiale 25 présentant une surface extérieure cylindrique et située du côté de la collerette 22 opposé à l'extrémité 23 du moyeu 5, l'extrémité de l'arbre 21 passant à l'intérieur de ladite extension axiale 25.

Un disque de frein 26 comprenant une portion de friction 27 entourant le moyeu 5, et la jante 24 sont ajustés sur l'extrémité 23 du moyeu 5 en venant en appui radial sur la collerette 22. Le disque de frein 26 comprend une portion centrale 28 décalée axialement par rapport à la portion de friction 27 et interposée entre la jante 24 et la collerette 22. La jante et le disque de frein 26 sont liées en rotation a moyeu 5 par des vis et des tocs non représentés.

Le moyeu 5 est monté à rotation par rapport au pivot 7 par l'intermédiaire d'un palier à roulement 29 à deux rangées d'éléments roulants à contacts obliques dont les bagues intérieures sont ajustées sur l'extension axiale 25 du moyeu 5, les bagues intérieures étant immobilisées axialement et en rotation par rapport au moyeu 5

Le pivot 7 est relié par une première articulation 9 à un bras supérieur 12 d'un support de pivot 8 en forme générale de C. La première articulation 9 comprend un logement sphérique 14 formé dans le bras supérieur 12 et une rotule sphérique 15 fixée sur le pivot 7. De manière connue en soi, le logement sphérique 14 comporte plusieurs pièces qui n'ont pas été représentées pour des raisons de clarté du dessin.

Le pivot 7 est relié par une seconde articulation 10 à un bras inférieur 13 du support de pivot 8. La seconde articulation 10 comprend une bride 30 munie d'une partie de fixation 31 sur le bras inférieur 13 et d'une partie de logement 32 apte à recevoir un palier à roulement 33. Le pivot 7 comprend une extrémité libre 34 formant un axe qui présente une surface extérieure cylindrique ajustée avec un serrage dans une bague intérieure du palier à roulement 33. L'axe du palier à roulement 33 passe par le centre de la première articulation 9. Les première et seconde articulations 9, 10 ainsi disposées permettent une rotation du pivot 7 par rapport au support de pivot 8 selon un axe principal passant par le centre de la première articulation 9 et confondu avec l'axe du palier à roulement 33.

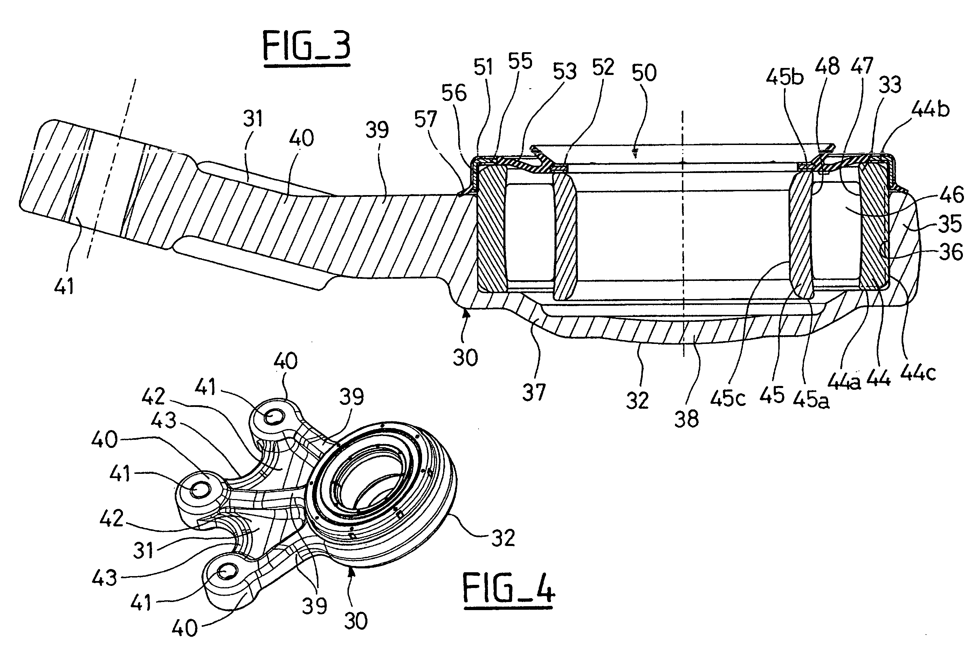

Comme on peut mieux le voir sur les figures 3 et 4, la partie de logement 32 de la bride 30 comprend une portion tubulaire 35 présentant une portée cylindrique intérieure 36 et fermée d'un côté par un flasque 37 monobloc avec la partie tubulaire et s'étendant radialement vers l'intérieur. Le flasque 37 comprend une portion centrale 38 décalée par rapport à la zone de plus grand diamètre du flasque 37 du côté opposé à la portion tubulaire 35 et formant un renfoncement dans le flasque 37 du côté de la portion tubulaire 35 et une bosse correspondante dirigée vers l'extérieur.

La partie de fixation 31 de la bride comprend des bras épais, ici au nombre de trois, s'étendant vers l'extérieur à partir de la portion tubulaire 35 de la partie de logement 32, sensiblement du même côté. Les bras épais comprennent chacun une base 39 s'étendant radialement à partir de la portion tubulaire 35 et une portion d'extrémité 40 s'étendant obliquement, radialement vers l'extérieur et axialement du côté ouvert de la portion tubulaire 35. Chaque bras épais comprend à son extrémité un perçage fileté 41. Deux bras épais adjacents sont reliés entre eux par des portions minces 42 de rigidification formant un voile. Les extrémités de deux bras épais adjacents sont reliées par des nervure transversales épaisses 43 de rigidification.

Le palier à roulement 33 est muni d'une première bague extérieure 44, une seconde bague intérieure 45, et une rangée d'éléments roulants 46, ici sous la forme de rouleaux, disposés entre les bagues extérieure 44 et intérieure 45.

La bague extérieure 44 comprend une surface intérieure présentant axialement un profil incurvé à concavité orientée vers l'intérieur, et formant chemin de roulement 47, des surfaces frontales 44a, 44b, et une surface extérieure cylindrique 44c. La bague intérieure 45 comprend une surface extérieure présentant axialement un profil incurvé, à concavité orientée vers l'extérieur, et formant chemin de roulement 48, des surfaces frontales 45a, 45b, et une surface intérieure cylindrique 45c formant l'alésage du palier à roulement 33. Les éléments roulants 46 sont disposés entre les chemins de roulement 47, 48 des bagues extérieure 44 et intérieure 45, en contact desdits chemins de roulement 47, 48, les axes des rouleaux 46 étant sensiblement parallèles entre eux.

La bague extérieure 44 est ajustée par sa surface extérieure 44c dans la portée cylindrique intérieure 36 de la partie de logement 32, en venant en contact axial par sa surface frontale 44a contre le flasque 37. La bague extérieure 44 présente une longueur axiale supérieure à la longueur de la portée cylindrique intérieure 36, de sorte qu'une portion d'extrémité 49 de la bague extérieure 44 se situe en saillie de la partie de logement 32.

Les rouleaux 46 et les chemins de roulement 47, 48 présentent en section longitudinale des profils incurvés de façon correspondante dont le rayon de courbure est notablement plus grand que la plus grande distance entre l'axe central du palier à roulement 32 et les chemins de roulement. Les rouleaux 46 sont montés entre les chemins de roulement 47, 48 avec un jeu adéquat autorisant un certain déplacement axial relatif entre les bagues 44, 45 ainsi qu'un certain rotulage entre les bagues 44, 45. En outre, le déplacement axial relatif et le rotulage de sbagues 44, 45 peut être favorisé si en section longitudinale le profil des chemins de roulement 47, 48 présente un rayon de courbure supérieur au rayon de courbure des éléments roulants 46.

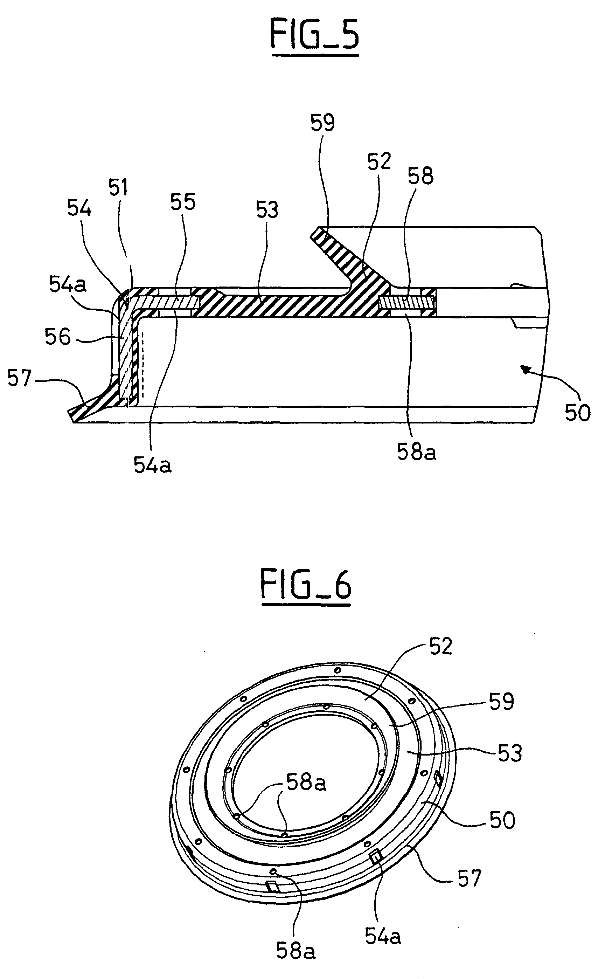

La seconde articulation 10 comprend un organe d'étanchéité 50. Comme on peut mieux le voir sur les figures 5 et 6, l'organe d'étanchéité 50 comprend une partie externe 51, une partie interne 52, et une membrane intermédiaire déformable 53 s'étendant sensiblement radialement entre les parties interne 52 et externe 51.

La partie externe 51 comprend un armature métallique 54 en forme de coupelle à demi-section en L comprenant une collerette radiale 55 sur laquelle vient se raccorder une parti axiale tubulaire en forme de manchon 56 s'étendant axialement d'un premier côté à partir de la zone de plus grand diamètre de la collerette radiale 55. L'armature 54 est noyée dans un revêtement en matière synthétique surmoulée sur l'armature 54 de la partie externe 51 et formant une jupe extérieure 57 s'étendant de façon oblique à partir de l'extrémité libre du manchon 56, radialement vers l'extérieur, et axialement du côté opposé à la collerette radiale 55. L'armature métallique 54 présente localement des portions découvertes 54a qui résultent de la fabrication de l'organe d'étanchéité 50.

La partie interne 52 comprend une armature métallique sous la forme d'un anneau 58 se situant sensiblement dans le même plan radial que la collerette radiale 55 de la partie externe 52. L'anneau 58 est noyé dans un revêtement en matière synthétique surmoulée sur l'anneau 58, et formant une lèvre intérieure 59 s'étendant de façon oblique, radialement vers l'extérieur, et axialement du côté opposé au manchon 56 de la partie externe 52. L'anneau métallique 58 présente localement des portions découvertes 58a qui résultent de la fabrication de l'organe d'étanchéité 50.

Les revêtements des parties interne 52 et externe 51, et la membrane intermédiaire 53 sont de préférence formés d'un seul bloc, et lors d'une même opération de moulage par injection d'une matière synthétique telle qu'un élastomère.

En revenant à la figure 3, le manchon 56 de la partie externe 51 de l'organe d'étanchéité 50 entoure la portion d'extrémité 49. Le manchon 56 est ajusté sur la surface extérieure 44c de la bague extérieure 44 du palier à roulement 33, par exemple avec serrage. La partie externe 51 vient en contact axial contre la surface frontale 44b de la bague extérieure 44 par la collerette radiale 55. Le manchon 56 vient à proximité axialement de la portion tubulaire 35 de la partie de logement. La jupe extérieure 5 7 vient en contact par son bord libre avec la portion tubulaire 35 de la partie de logement 32. La jupe extérieure 57 formant une lèvre d'étanchéité statique est déformée élastiquement pour assurer une meilleure étanchéité entre la jupe extérieure 57 et la portion tubulaire 35 de bride 30. La partie interne 52 vient en contact axial avec la surface frontale 45b de la bague intérieure 45 par son anneau 58.

Tel que représenté sur la figure 3, la bague intérieure est décalée axialement du côté du flasque 37 par rapport à la bague extérieure. La surface frontale 45b de la bague intérieure est décalée par rapport à la surface frontale 44b de la bague extérieure 44. La membrane 53 reliant les parties externe 51 et interne 52 de l'organe d'étanchéité 50 est déformée pour permettre le mouvement relatif des bagues entraînant le mouvement relatif de parties interne 52 et externe 51 de l'organe d'étanchéité 50.

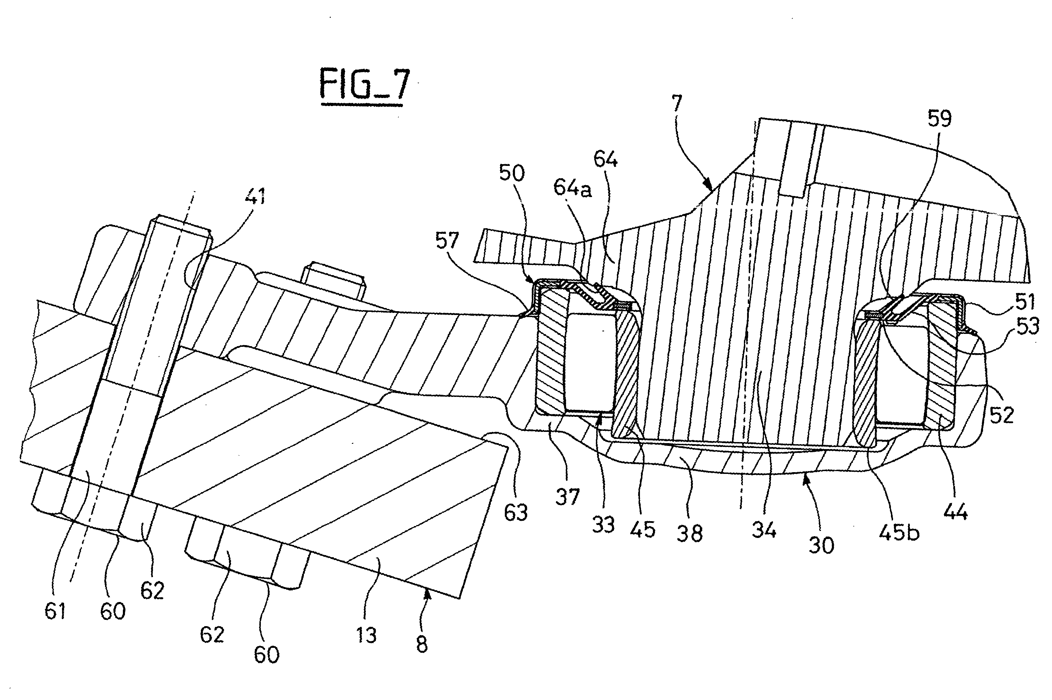

Comme on peut le voir sur la figure 7, la bride 30 est fixée à l'extrémité libre du bras inférieur 13 par l'intermédiaire de vis 60 traversant des trous 61 pratiqués dans le bras inférieur 13. Une vis 60 est bloquée axialement du côté opposé à la bride par une tête 62. L'extrémité filetée d'une vis 60 est engagée avec les perçages filetés 41 des bras épais de la bride 30 pour serrer et fixer la bride 30. La bride 30 est en contact avec une surface 63 du bras inférieur 13 orientée vers le bras supérieur 12 du support de pivot 8.

L'extrémité libre 34 du pivot 7, présentant un surface extérieure cylindrique, est emmanchée avec serrage dans la bague intérieure 45 du palier à roulement 33. L'extrémité libre 34 est reliée par une embase 64 présentant une surface radiale 64a à une partie inférieure 65 du pivot 7. La lèvre intérieure 59 vient en contact par son bord libre avec la surface radiale 64a de l'embase 64. L'extrémité libre 34 est enfoncée dans la bague intérieure 45 de façon que son extrémité opposée à l'embase 64 ne s'étend pas axialement au-delà du plan radial de la surface frontale 45b de la bague intérieure 45 située du côté opposé du pivot 7. La lèvre intérieure 59 en contact avec l'embase 64 est déformée élastiquement pour assurer un contact permanent d'étanchéité entre le lèvre intérieure 59 et l'embase 64.

Lors de déformations du support de pivot 8, la structure particulière du palier à roulement 33 autorise un certain déplacement relatif axial des bagues intérieure 45 et extérieure 44, ainsi qu'un certain rotulage relatif des bagues intérieure 45 et extérieure 44 selon des axes perpendiculaires à l'axe principal du palier à roulement, tout en restant apte à supporter des efforts radiaux importants. L'articulation inférieure 10 permet ainsi la transmission des efforts, tout en évitant la formation de contraintes qui apparaitraient au niveau de ladite articulation inférieure 10 et de son palier à roulement 33 si il n'existait pas cette possibilité de rotulage et de déplacement axial offerte par le palier à roulement 33.

Sur la figure 7, la seconde articulation 10, le support de pivot 8 et le pivot 7 sont représentés dans une position dite minimale, correspondant à un rapprochement des extrémités des bras inférieur 13 et supérieur 12 (fig. 2) du support de pivot 8. La bague extérieure 44 est en appui axial contre le flasque 37 de la partie de logement 32 de la bride 30. La bague intérieure 45 est décalée axialement par rapport à la bague extérieure 44, du côté du flasque 37.

Le renfoncement central 38 du flasque 37 autorise un déplacement de la bague intérieure 44. La bague intérieure 44 est représentée dans un position minimale, dans laquelle la surface frontale 44a de la bague intérieure 44 vient à proximité de la partie centrale du flasque 37. Ce déplacement n'est pas gêné par l'extrémité libre 34 du pivot 7 qui ne dépasse pas de la bague intérieure 44.

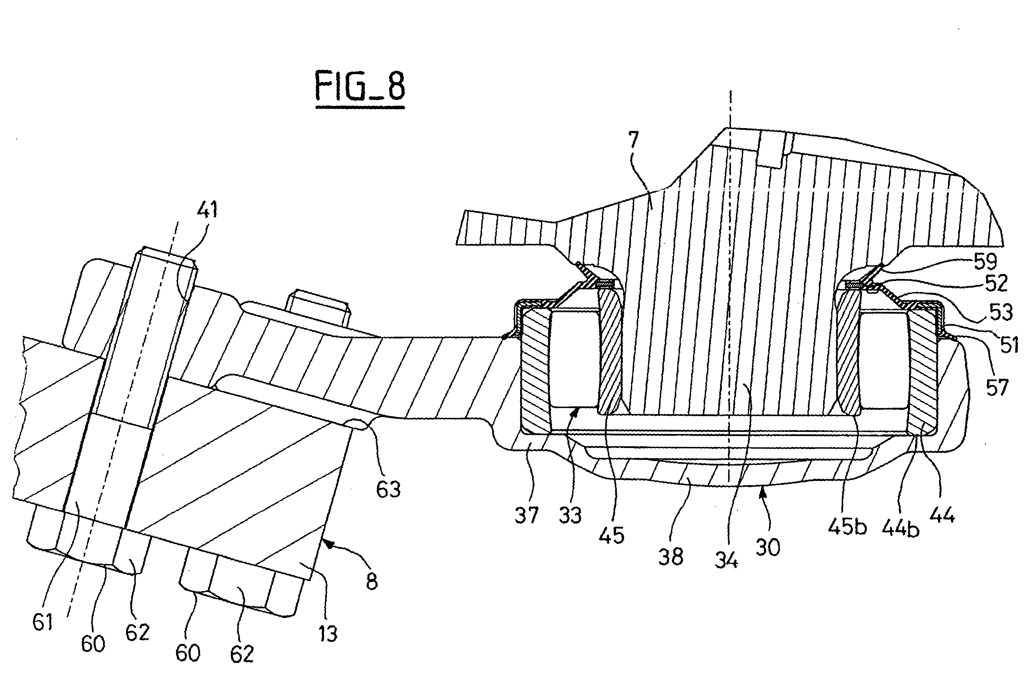

Sur la figure 8, la bague intérieure 44 et le pivot 7 sont représentés dans une position maximale dans laquelle la bague intérieure 44 est décalée relativement à la bague extérieure 45 du côté opposé au flasque 37. Cette position correspond à un écartement maximal entre les extrémités des bras inférieur 13 et supérieur 12.

Dans toutes les positions, la lèvre intérieure 59 est en contact permanent avec l'embase 64. Un effort axial permanent est appliqué par précontrainte élastique sur la lèvre intérieure 59 qui plaque la partie centrale 52 de l'organe d'étanchéité 50 contre la surface frontale 45b de la bague intérieure 45. La partie interne 51 de l'organe d'étanchéité est en appui permanent sur la bague extérieure 44.

Un dispositif de fixation de roue de véhicule automobile est particulièrement exposé aux projections d'éléments polluants. La partie externe 51 de l'organe d'étanchéité et la jupe extérieure 57 empêche le passage d'éléments polluants entre la bague extérieure 44 et la portion tubulaire 35 de la partie de logement 32, et entre les bagues intérieures et extérieures. La membrane intermédiaire 53 empêche le passage d'éléments polluants entre les bagues intérieure 45 et extérieure 44. La lèvre intérieure 59 empêche le passage d'éléments polluants entre l'extrémité libre 34 formant axe du pivot 7 et la bague intérieure 44. Du côté axialement opposé à l'organe d'étanchéité 50, le flasque 37 empêche le passage d'éléments polluants. La partie de logement 32 du palier à roulement 33 est ainsi protégée, ce qui assure un meilleur fonctionnement de l'articulation inférieure 10, moins de frottements de rotation du pivot 7 selon l'axe principal, et une longévité améliorée de l'articulation inférieure 10.

En revenant à la figure 2, lors du montage du pivot 7 sur le support de pivot 8, l'articulation inférieure 10 est fixée sur le pivot 7 par emmanchement de l'extrémité libre formant axe 34 dans la bague intérieure 45 du palier à roulement 33. Ensuite, la rotule sphérique 15 est fixée sur le pivot 7, puis insérée dans son logement sphérique 14 du bras supérieur 12, qui comprend plusieurs pièces séparables non représentés pour faciliter l'introduction de la rotule 15. A cette étape, le pivot 7 peut être orienté de façon désirée grâce au trois degrés de liberté en rotation de la rotule 15. Le pivot 7 est positionné de façon à permettre la fixation de la bride 30 de la seconde articulation 10 sur le bras inférieur 13 du support de pivot 7. Par ailleurs, l'utilisation d'une articulation inférieure sous la forme d'un palier à roulement facilite le montage, par rapport au cas où la seconde articulation serait du type rotule.

Lors d'une phase de roulage du véhicule automobile, les efforts sont transmis de la roue 2 vers le support de pivot 8 et vers le châssis 3 du véhicule. La première articulation 9, du type rotule, transmet des efforts axiaux, selon l'axe principal de rotation du pivot 7, et des efforts radiaux. La seconde articulation 10 transmet principalement des efforts radiaux. Lors de l'application de contraintes importantes, le support de pivot 8 peut subir des déformations modifiant la distance entre les première et seconde articulations 9, 10, ou provoquant un défaut d'alignement du centre de la première articulation 9 avec l'axe du palier à roulement de la seconde articulation 10. De tels défauts d'alignement risquent de provoquer l'apparition de contraintes dans le pivot, et un fonctionnement dégradé des articulations 9, 10.

La seconde articulation 9 autorise un déplacement axial relatif des bagues intérieure et extérieure 44, 45, et une rotation relative entre les bagues 44, 45 selon des axes secondaires perpendiculaires à l'axe du palier à roulement 33. Ces possibilités de déplacement relatif entre les bagues 44, 45 permettent une adaptation de la seconde articulation 10 conservant l'alignement du centre de la première articulation 9 avec l'axe de la seconde articulation 10 malgré une déformation du support de pivot 8. Ceci évite l'apparition d'efforts de friction dans les articulations 9, 10. De plus, les contraintes supportées par le pivot 7 et les première et seconde articulations 9, 10 sont diminuées. Le palier à roulement 33 est adapté pour transmettre des efforts radiaux importants, sans apparition d'effort de frottement, malgré des déplacements relatifs entre les bagues.

L'organe d'étanchéité 50 de la seconde articulation est adapté pour assurer l'étanchéité malgré un déplacement axial relatif des bagues 44, 45, une rotation relative des bagues selon un axe différent de l'axe principal du palier à roulement 33, ou même un déplacement radial relatif d'une bague par rapport à l'autre.

Grâce à l'invention, on obtient un dispositif de fixation de pivot de véhicule automobile permettant l'emploi de pièces allégées présentant une rigidité faible, tout en assurant un fonctionnement adéquat d'articulations entre le pivot et un support de pivot, en assurant l'étanchéité des articulations, malgré des déplacements relatifs, et en limitant les efforts de friction s'opposant à la rotation du pivot. L'invention permet en outre de faciliter considérablement le montage et le démontage du pivot par rapport à des dispositifs conventionnels à deux articulations du type rotules.

## Revendications

1. Dispositif de fixation de pivot de roue (2) de véhicule automobile comprenant un support de pivot (8) prévu pour être relié à un ensemble de liaison au sol, le support (8) étant apte à recevoir un pivot (7) avec possibilité de rotation selon un axe principal de pivotement par l'intermédiaire de première et seconde articulations (9, 10), la première articulation (9) étant du type à au moins un degré de liberté de rotation selon l'axe principal, **caractérisé par le fait que** la seconde articulation (10) comprend un palier à roulement (33) comprenant des bagues intérieure (45) et extérieure (44), et offrant principalement un degré de liberté de rotation selon l'axe principal, le palier à roulement étant adapté pour permettre un déplacement relatif des bagues intérieure et extérieure pour offrir une possibilité de rotation selon des axes secondaires perpendiculaires à l'axe principal et de déplacement axial sensiblement selon l'axe principal.

2. Dispositif selon la revendication 1, **caractérisé par le fait que** le support (8) comprend un corps (11) et des premier et second bras (12, 13) s'étendant sensiblement perpendiculairement au corps à partir d'extrémités opposées du corps (11), les première et seconde articulations (9, 10) étant portées par des extrémités libres des premier et second bras (12, 13).

3. Dispositif selon l'une quelconque des revendications 1 ou 2, **caractérisé par le fait que** la seconde articulation (10) est munie d'un palier à roulement (33) comprenant une première bague (44), une seconde bague (45), une rangée de rouleaux (46) disposés entre des chemins de roulement (47, 48) des première et seconde bagues (44, 45), les axes des rouleaux étant sensiblement parallèles entre eux, les rouleaux (46) et les chemins de roulement (47, 48) présentant en section longitudinale des profils incurvés de façon correspondante dont le rayon de courbure est notablement plus grand que la plus grande distance entre l'axe central du palier à roulement (33) et les surfaces des chemins de roulement (47, 48).

4. Dispositif selon l'une quelconque des revendications précédentes, **caractérisé par le fait que** la seconde articulation (10) comprend une bride (30) pourvue d'une partie de fixation (31) sur le support et d'une partie de logement (32) d'un palier à roulement (33), la partie de logement (32) présentant une portée intérieure cylindrique destinée à recevoir une bague extérieure du palier à roulement (33).

5. Dispositif selon l'une quelconque des revendications précédentes, **caractérisé par le fait que** la seconde articulation (10) comprend des moyens d'étanchéité et de protection d'un palier à roulement adaptés pour des déplacements relatifs d'une bague du palier à roulement par rapport à une autre.

6. Dispositif selon l'une quelconque des revendication 4 ou 5, **caractérisé par le fait que** la partie de logement (32) est fermée axialement d'un côté par un flasque (37) radial présentant un renfoncement intérieur central (38).

7. Dispositif selon l'une quelconque des revendications 4 à 6, **caractérisé par le fait qu'**il comprend un organe d'étanchéité (50) comprenant une partie externe (51) coopérant avec une surface frontale (44b) d'une bague extérieure (44) d'un palier à roulement, une partie interne (52) coopérant avec une surface frontale (45b) d'une bague intérieure (45) dudit palier à roulement, et une membrane déformable intermédiaire (53) reliant les parties interne (52) et externe (51).

8. Dispositif selon la revendication 7, **caractérisé par le fait que** l'organe d'étanchéité (50) comprend une lèvre (59) s'étendant à partir de la partie interne (52) de l'organe d'étanchéité pour un contact étanche avec le pivot (7).

9. Dispositif selon l'une quelconque des revendications 7 ou 8, **caractérisé par le fait que** la partie externe (51) comprend un manchon ajusté sur une surface extérieure (44c) d'une portion d'extrémité (49) de la bague extérieure (44).

10. Dispositif selon l'une quelconque des revendications 4 à 9, **caractérisé par le fait que** la bride (30) comprend au moins deux bras s'étendant à partir d'une partie de logement (32) de la bride (30) et possédant des extrémités distantes percées pour une fixation avec le support (8).

## Patentansprüche

1. Vorrichtung zur Halterung eines Schwenklagers eines Rads (2) eines Kraftfahrzeugs mit einem Schwenklagerträger (8), der dazu vorgesehen ist, in eine Radaufhängung eingebunden zu werden, wobei der Träger (8) in der Lage ist, ein Schwenklager (7) mit der Möglichkeit einer Drehbewegung um eine Hauptschwenkachse über ein erstes und ein zweites Gelenk (9, 10) aufzunehmen, wobei das erste Gelenk (9) von der Art mit wenigstens einem Freiheitsgrad der Rotation um die Hauptachse ist, **dadurch gekennzeichnet, dass** das zweite Gelenk (10) ein Wälzlager (33) aufweist, das einen Innenring (45) und einen Außenring (44) enthält und in erster Linie einen Freiheitsgrad der Rotation um die Hauptachse bietet, wobei das Wälzlager dazu eingerichtet ist, eine relative Verlagerung zwischen dem Innenring und dem Außenring zu ermöglichen, um eine Möglichkeit einer Drehbewegung um zu der Hauptachse senkrechte Nebenachsen sowie einer Axialverschiebung im Wesentlichen längs der Hauptachse zu bieten.

2. Vorrichtung nach Anspruch 1, **dadurch gekennzeichnet, dass** der Träger (8) einen Körper (11) sowie einen ersten und einen zweiten Arm (12, 13) aufweist, die sich ausgehend von den entgegengesetzten Enden des Körpers (11) im Wesentlichen senkrecht zu dem Körper erstrecken, wobei das erste und das zweite Gelenk (9, 10) durch die freien Enden des ersten und zweiten Armes (12, 13) getragen sind.

3. Vorrichtung nach einem der vorhergehenden Ansprüche 1 oder 2, **dadurch gekennzeichnet, dass** das zweite Gelenk 10 mit einem Wälzlager (33) versehen ist, das einen ersten Ring (44), einen zweiten Ring (45) und eine Reihe von Wälzkörpern (46) aufweist, die zwischen Laufbahnen (47, 48) des ersten und zweiten Ringes (44, 45) angeordnet sind, wobei die Achsen der Wälzkörper im Wesentlichen parallel zueinander verlaufen, die Wälzkörper (46) und die Laufbahnen (47, 48) im Längsschnitt passend gekrümmte Profile aufweisen, deren krümmungsradius wesentlich größer ist als der größte Abstand zwischen der zentralen Achse des Wälzlagers (33) und den Oberflächen der Laufbahnen (47, 48).

4. Vorrichtung nach einem der vorhergehenden Ansprüche, **dadurch gekennzeichnet, dass** das zweite Gelenk (10) einen Bügel (30) aufweist, der mit einem Abschnitt (31) zur Befestigung an dem Träger und einem Abschnitt (32) zur Aufnahme eines Wälzlagers (33) versehen ist, wobei der Aufnahmeabschnitt (32) einen zylindrischen Innensitz aufweist, der dazu vorgesehen ist, einen Außenring des Wälzlagers (33) aufzunehmen.

5. Vorrichtung nach einem der vorhergehenden Ansprüche, **dadurch gekennzeichnet, dass** das zweite Gelenk (10) Mittel zur Abdichtung und zum Schutz eines Wälzlagers aufweist, die für relative Verlagerungen eines Rings des Wälzlagers in Bezug auf einen anderen passend eingerichtet sind.

6. Vorrichtung nach einem der Ansprüche 4 oder 5, **dadurch gekennzeichnet, dass** der Aufnahmeabschnitt (32) in axialer Richtung von einer Seite durch einen Radialflansch (37) verschlossen ist, der eine innere zentrale Vertiefung (38) aufweist.

7. Vorrichtung nach einem der Ansprüche 4 bis 6, **dadurch gekennzeichnet, dass** sie ein Dichtungselement (50) mit einem äußeren Teil (51), der mit einer Stirnfläche (44b) eines Außenrings (44) eines Wälzlagers zusammenwirkt, einem inneren Teil (52), der mit einer Stirnfläche (45b) eines Innenrings (45) des Wälzlagers zusammenwirkt, und einer dazwischenliegenden verformbaren Membran (53) aufweist, die den inneren Teil (52) mit dem äußeren Teil (51) verbindet.

8. Vorrichtung nach Anspruch 7, **dadurch gekennzeichnet, dass** das Dichtungselement (50) eine Lippe (59) aufweist, die sich ausgehend von dem inneren Teil (52) des Dichtungselementes derart erstreckt, um einen dichten Kontakt mit dem Schwenklager (7) zu schaffen.

9. Vorrichtung nach einem der Ansprüche 7 oder 8, **dadurch gekennzeichnet, dass** der äußere Teil (51) eine Hülse aufweist, die an die Außenfläche (44c) eines Endabschnitts (49) des Außenrings (44) angepasst ist.

10. Vorrichtung nach einem der Ansprüche 4 bis 9, **dadurch gekennzeichnet, dass** der Bügel (30) wenigstens zwei Arme aufweist, die von einem Aufnahmeabschnitt (32) des Bügels (30) weg ragen und entfernte Enden mit Bohrungen zur festen Verbindung mit dem Träger (8) haben.

## Claims

1. Device for fixing the pivot of a wheel (2) of a motor vehicle, comprising a pivot support (8) designed to be connected to a suspension system, the support (8) being able to accommodate a pivot (7) such that it can rotate about a main pivot axis in first and second joints (9, 10), the first joint (9) being of the type with at least one degree of freedom of rotation about the main axis, which device is **characterized in that** the second joint (10) comprises a rolling-contact bearing (33) comprising inner (45) and outer (44) rings, and offering mainly one degree of freedom of rotation about the main axis, the rolling-contact bearing being designed to allow relative movement between the inner and outer rings to offer a possibility of rotation about secondary axes perpendicular to the main axis and a possibility of axial movement essentially along the main axis.

2. Device according to Claim 1, **characterized in that** the support (8) comprises a body (11), and first and second arms (12, 13) extending essentially perpendicularly to the body from opposite ends of the body (11), the first and second joints (9, 10) being carried by free ends of the first and second arms (12, 13).

3. Device according to either of Claims 1 and 2, **characterized in that** the second joint (10) is provided with a rolling-contact bearing (33) comprising a first ring (44), a second ring (45), and a row of rollers (46) placed between the races (47, 48) of the first and second rings (44, 45), the axes of the rollers being essentially parallel to each other, and the rollers (46) and the races (47, 48) having profiles, in longitudinal section, that are curved in a corresponding manner, their radius of curvature being considerably greater than the greatest distance between the central axis of the rolling-contact bearing (33) and the surfaces of the races (47, 48).

4. Device according to any one of the preceding claims, **characterized in that** the second joint (10) comprises a collar (30) provided with a fixing part (31) by which it is fixed to the support, and with a housing part (32) for housing a rolling-contact bearing (33), the housing part (32) having a cylindrical internal bearing surface designed to accommodate an outer ring of the rolling-contact bearing (33).

5. Device according to any one of the preceding claims, **characterized in that** the second joint (10) comprises, for a rolling-contact bearing, protective and sealing means suitable for relative movements between one ring of a rolling-contact bearing and another.

6. Device according to either of Claims 4 and 5, **characterized in that** the housing part (32) is closed axially on one side by a radial disc (37) having a central internal depression (38).

7. Device according to any one of Claims 4 to 6, **characterized in that** it comprises a sealing member (50) comprising an outer part (51) engaging with an end surface (44b) of an outer ring (44) of a rolling-contact bearing, an inner part (52) engaging with an end surface (45b) of an inner ring (45) of the said rolling-contact bearing, and an intermediate deformable membrane (53) connecting the inner (52) and the outer (51) parts.

8. Device according to Claim 7, **characterized in that** the sealing member (50) comprises a lip (59) extending from the inner part (52) of the sealing member for a leaktight contact with the pivot (7).

9. Device according to either of Claims 7 and 8, **characterized in that** the outer part (51) comprises a sleeve adjusted over an outer surface (44c) of an end portion (49) of the outer ring (44).

10. Device according to any one of Claims 4 to 9, **characterized in that** the collar (30) comprises at least two arms extending from a housing part (32) of the collar (30) and possessing remote ends pierced for fixing to the support (8).
